# EUROPEAN PATENT APPLICATION

(11) **EP 4 366 121 A2**
(43) Date of publication of application: **08.05.2024**
(21) Application number: 23207048.2
(22) Date of filing: 31.10.2023
(51) Int. Cl.: H02J 7/00, H02J 7/34, H02M 1/32

(54) **METHOD FOR INTERMITTENTLY DISCHARGING INVERTER IN ENERGY STORAGE APPARATUS AND ENERGY STORAGE APPARATUS USING THE SAME**

(30) Priority: 01.11.2022 TW 111141638
(71) Applicant: C.T.I. Traffic Industries Co., Ltd., Tainan City 720 (TW)
(72) Inventor: TSENG, Shih-Feng, Tainan City (TW); CHEN, Chun-Hsiung, Tainan City (TW)
(74) Representative: Lang, Christian

(57) **Abstract**

A method for intermittently discharging an inverter (5) in an energy storage apparatus (100) and an energy storage apparatus (100) using the method are disclosed. The method includes a protection step; and an intermittent discharge step, which includes having a battery management system (2) detect a charge level of a capacitor (51) and send it to a control unit (1), and when the charge level is below an activation threshold, having the control unit (1) control a battery pack (3) to perform a first discharge procedure to charge the capacitor (51) for at least two times intermittently until the charge level reaches the activation threshold, thereby providing fast charge for the capacitor (51).

## Description

### BACKGROUND OF THE INVENTION

### (a) Field of the Invention

The present invention relates to a method for discharging an energy storage apparatus and an energy storage apparatus using the method. More particularly, the present invention relates a method for discharging an inverter in an energy storage apparatus intermittently and an energy storage apparatus using the method according to the preamble of claims 1 and 8.

### (b) Description of the Prior Art

Generally, an energy storage apparatus is installed in, for example, an energy storage box or an energy storage vehicle, and works as a backup power source in order to maintain stable power supply when necessary.

For example, China Patent Publication No. CN114221425A discloses an emergency power supply vehicle based on hydrogen energy power supply and a power supply control method thereof. The emergency power supply vehicle comprises a mobile vehicle being used for providing a mobile carrier for emergency power supply; a container power supply device being powered by hydrogen energy, used as an emergency power supply to provide first power supply power for a load or charge a chassis power supply device, and arranged on the mobile vehicle; a chassis power supply device, being internally provided with an energy storage battery, used for providing low-voltage electricity and second power supply power for the load and balancing the power supply output of the container power supply device, and is connected with the container power supply device in parallel; and an inverter being used for converting the first power supply power and the second power supply power into alternating current used by a load and respectively connected with the container power supply device and the chassis power supply device.

For maintaining stable in terms of voltage and current, an energy storage apparatus usually has an inverter equipped with or connected in parallel to a capacitor that is configured to be charged by a battery. However, a battery charges a capacitor with a relatively low current, which means the charging process will be extremely long if the capacitor is large in capacity.

### SUMMARY OF THE INVENTION

Hence, the inventor of the present invention proposes a method for intermittently discharging an inverter in an energy storage apparatus that has a battery pack as described in the claims. The method comprises: a protection step, comprising when an electrical or temperatural abnormality occurs in the inverter and/or the battery pack, having a control unit block the inverter from outputting a working current before an end of a response period; and an intermittent discharge step, comprising having a battery management system measure a charge level in a capacitor of the inverter and send information of the charge level to the control unit, and when the charge level is below an activation threshold, having the control unit control the battery pack to perform a first discharge procedure to charge the capacitor for at least two times intermittently until the charge level reaches the activation threshold; each of the at least two times of the first discharge procedure including having the battery pack output a first current to the capacitor through a power transistor throughout a first time period, and stop outputting the first current when the first time period ends; and the first current being smaller than 5C or a short-circuit discharge current and being greater than 1C.

Therein, the electrical abnormality occurs when the battery management system detects that the inverter and/or the battery pack has any of or a combination of an abnormal voltage, an abnormal current, and an short-circuit current.

Further, each successive two of the at least two times of the first discharge procedure are separated by a second time period.

Further, in the second time period, the control unit controls the battery pack to stop discharging.

Further, in the second time period, a second predischarge procedure is performed. The second predischarge procedure comprises having the control unit control the battery pack to output a second current to the capacitor through a power resistor, wherein the electrical abnormality includes a current value abnormality, which occurs when the working current is greater than a safe current value, and the second current is smaller than the safe current value.

Therein, the second current is not greater than 1C.

Therein, the first current is equal in each of the at least two times of the first discharge procedure.

Further, the method comprises an intermittent-discharge detection step, which includes, after each of the at least two times of the first discharge procedure, having the battery management system detect the charge level in the capacitor, and having the control unit selectively decrease the first current gradually as the charge level in the capacitor increases gradually.

The inventor of the present invention further proposes an energy storage apparatus as described in the claims. The energy storage apparatus comprises: a control unit; a battery management system, which is in signal connection with the control unit; a battery pack, which is in signal connection with the control unit, and is in electrical connection with the battery management system; a power transistor, which is in electrical connection with the battery pack; and an inverter, which is in electrical connection with the control unit and the battery management system, and has a capacitor and an output end, wherein the inverter outputs a working current from the output end; whereby when an electrical or temperatural abnormality occurs in the inverter and/or the battery pack, the control unit blocks the inverter from outputting the working current before an end of a response period; and the battery management system detects a charge level in the capacitor and sends information of the charge level to the control unit, and when the charge level is below an activation threshold, the control unit controls the battery pack to perform a first discharge procedure to charge the capacitor for at least two times intermittently until the charge level reaches the activation threshold, wherein each of the at least two times of the first discharge procedure comprises having the battery pack output a first current to the capacitor through a power transistor throughout a first time period, and stop outputting the first current when the first time period ends, in which each two successive times of the at least two times of the first discharge procedure are separated by a second time period, and the first time period is shorter than the response period.

With the technical features described previously, the present invention preferably achieves the following effects:
1. By intermittently charging with the first current, when the load is relatively high or the capacitor is relatively large, the capacitor can be fully charged rapidly without having any electrical or temperatural abnormality.
2. The disclosed method allows a user to selectively stop discharging or perform the second predischarge procedure between two successive times of the first discharge procedure according to the capacitor and circuitry actually used.
3. Each time of the first discharge procedure has the first current maintaining the same, so that when the load is relatively high or the capacitor is relatively large, the capacitor can be fully charged rapidly.
4. The first current used in successive times of the first discharge procedure may selectively decrease, so as to extend the service life of the capacitor.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 is a system diagram of an embodiment of the present invention.
FIG. 2 is a flowchart of an embodiment of the present invention.
FIG. 3 is a flowchart of another embodiment of the present invention.
FIG. 4 is a function diagram of an embodiment of the present invention, illustrating a first discharge procedure.
FIG. 5 is a function diagram of an embodiment of the present invention, illustrating a second discharge procedure.

### DETAILED DESCRIPTION OF THE PREFERRED EMBODIMENTS

Together with the aforementioned technical features, more beneficial effects of a method for intermittently discharging an inverter in an energy storage apparatus and an energy storage apparatus using the method according to the present invention will be further explained by way of some embodiments.

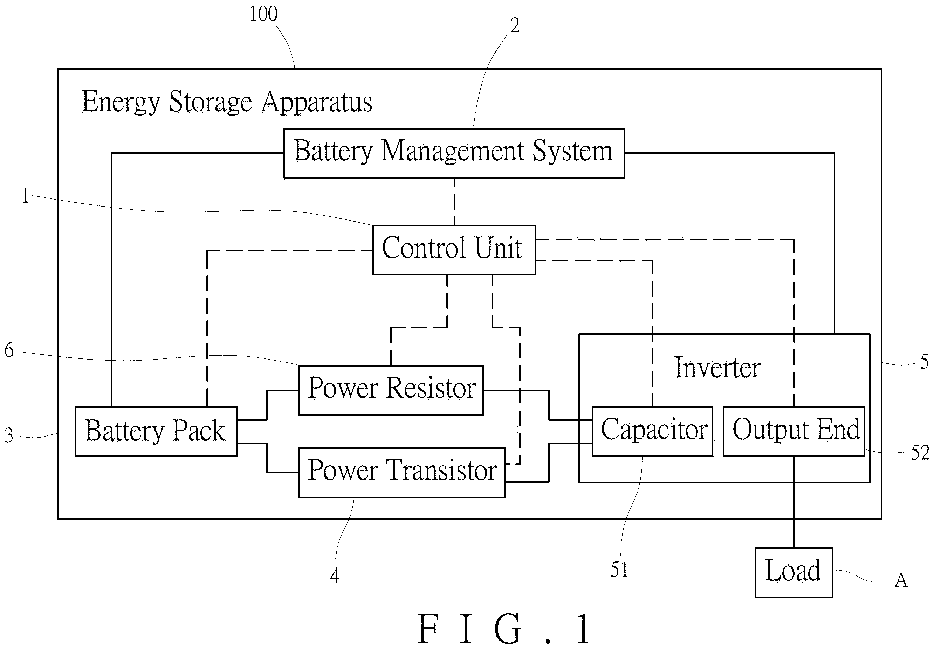

Referring to FIG. 1, an energy storage apparatus 100 of one embodiment of the present invention may be used to execute a method for intermittently discharging an inverter in an energy storage apparatus of the present invention. The disclosed method may alternatively be configured as a computer program, or a computer-readable medium that stores such a computer program, so as to allow the method for intermittently discharging an inverter in an energy storage apparatus to be loaded into and executed by a computer.

The energy storage apparatus 100 comprises:
a control unit 1, such as a microprocessor;
a battery management system 2, which is in signal connection with the control unit 1;
a battery pack 3, which is in signal connection with the control unit 1, and is in electrical connection with the battery management system 2;
a power transistor 4, which is in electrical connection with the battery pack 3;
an inverter 5, which is in electrical connection with the control unit 1 and the battery management system 2, and has a capacitor 51 and an output end 52, wherein the inverter 5 outputs a working current from the output end 52 to a load A; and
a power resistor 6, which is in electrical connection with the battery pack 3 and the inverter 5 and is connected in parallel to the power transistor 4.

In the preferred embodiment of the present invention, the control unit 1 and the battery management system 2 are separate from each other. However, in other implementations, the battery management system 2 may have the control unit 1 incorporated therein, or the power transistor 4 and the power resistor 6 may each be made as a part of the battery management system 2.

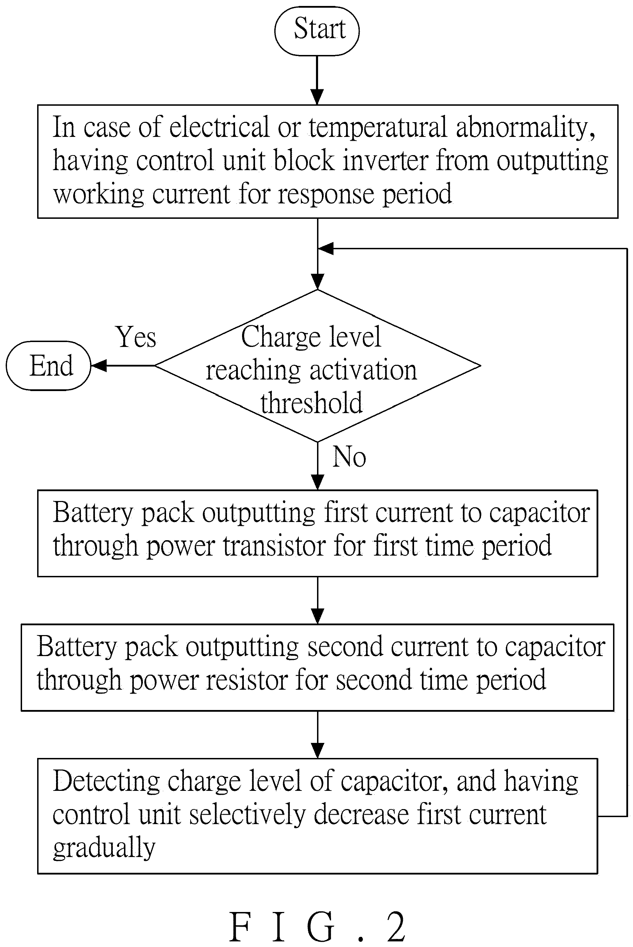

Referring to FIG. 1 through FIG. 3, the disclosed method comprises a protection step and an intermittent discharge step.

The protection step is about when an electrical or temperatural abnormality occurs in the inverter 5 and/or the battery pack 3, if the inverter 5 is outputting the working current, having the control unit 1 block the inverter 5 from outputting the working current before an end of a response period.

An electrical abnormality occurs when the battery management system 2 detects that the inverter 5 and/or the battery pack 3 has any of or a combination of an abnormal voltage, an abnormal current, and an short-circuit current.

A temperatural abnormality occurs when the battery management system 2 detects that the inverter 5 and/or the battery pack 3 overheats.

For example, where the battery pack 3 includes 6 sets of batteries connected in parallel, whenever the inverter 5 has any of a current higher than 55 amperes, a voltage lower than 45 volts, and a temperature higher than 45 °C, the control unit 1 blocks the inverter 5 from outputting the working current for the response period, such as 3 seconds.

On the other end, for a short-circuit current, which is emergency, once the current of the inverter 5 is higher than 75 amperes, the control unit 1 blocks the inverter 5 from outputting the working current within the response period, which is for example as short as 0.1 millisecond, so as to ensure safe use if the energy storage apparatus 100.

The intermittent discharge step includes having the battery management system 2 detect a charge level in the capacitor 51 and send information of the charge level to the control unit 1, and when the charge level is below an activation threshold, such as being less than 80% of the charge level in the capacitor 51, having the control unit 1 control the battery pack 3 to perform a first discharge procedure on the capacitor 51 for at least two times intermittently.

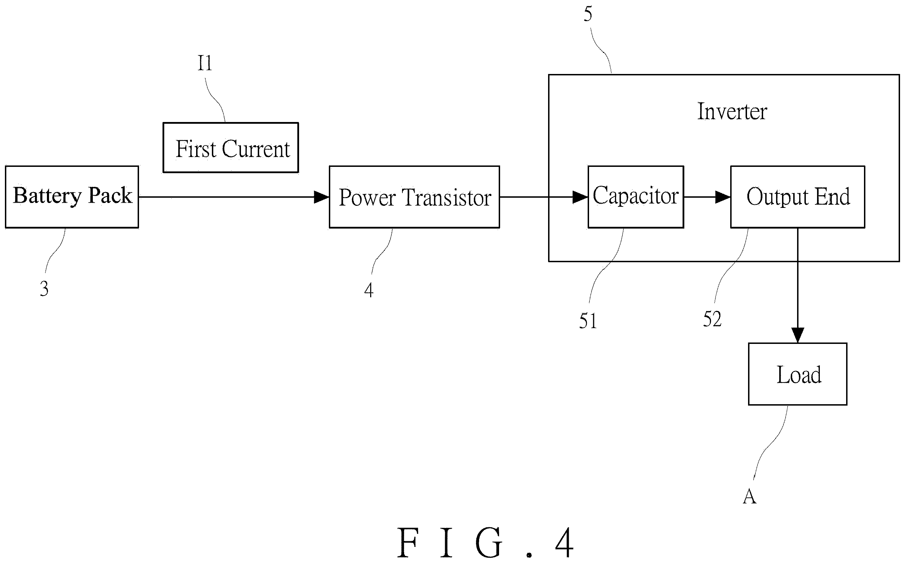

Each of the at least two times of the first discharge procedure comprises having the battery pack 3 output a first current 11 to the capacitor 51 through the power transistor 4 throughout a first time period that is shorter than the response period, and stop outputting the first current I1 when the first time period ends. The first current I1 is smaller than 5C and/or a short-circuit discharge current, so as not to be determined as an electrical abnormality, such as an abnormal current and/or a short-circuit current. Moreover, the first current I1 is greater than 1C, as shown in FIG. 4.

For instance, assuming that the response period is 3 seconds, the first time period may be set as 2.9 seconds, so as not to be determined as an electrical abnormality while allowing output of sufficient electric energy.

Each two successive times of the first discharge procedure are separated by a second time period. Throughout the second time period, a second predischarge procedure is performed.

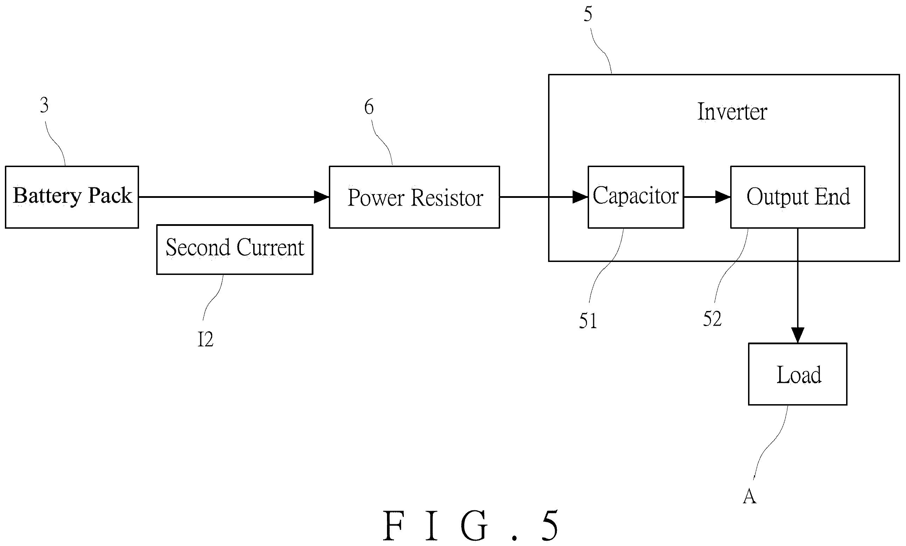

The second predischarge procedure comprises having the control unit 1 control the battery pack 3 to output a second current I2 to the capacitor 51 through the power resistor 6, as shown in FIG. 5.

The electrical abnormality may comprise a current value abnormality. The current value abnormality occurs when the working current is greater than a safe current value, an the second current I2 is smaller than the safe current value. The safe current value may be 55 amperes, as recited exemplarily above.

Preferably, the second current I2 is not greater than 1C, wherein C refers to the C-rate. A person of ordinary skill in the art would naturally decide the magnitudes of the second current I2 and the first current I1 of FIG. 4 according to the battery pack 3 and circuitry actually used.

The intermittent-discharge detection step is about after the battery management system 2 performs each time of the first discharge procedure, it detects the charge level in the capacitor 51. As the charge level in the capacitor 51 increases gradually, the control unit 1 selectively decreases the first current I1 gradually, so as to extend the service life of the capacitor 51.

For example, assuming that the first current I1 for the first time of the first discharge procedure is 100 units, it may be 70 units for the second time, still 70 units for the third time, and 40 units for the fourth time.

In practical use, the first current I1 may remain unchanged in each time of the first discharge procedure, so as to fully charge the capacitor 51 faster when the load A is relatively high or when the capacitor 51 is relatively large.

Once the charge level reaches the activation threshold, the control unit 1 is able to activate the inverter 5 and output the working current.

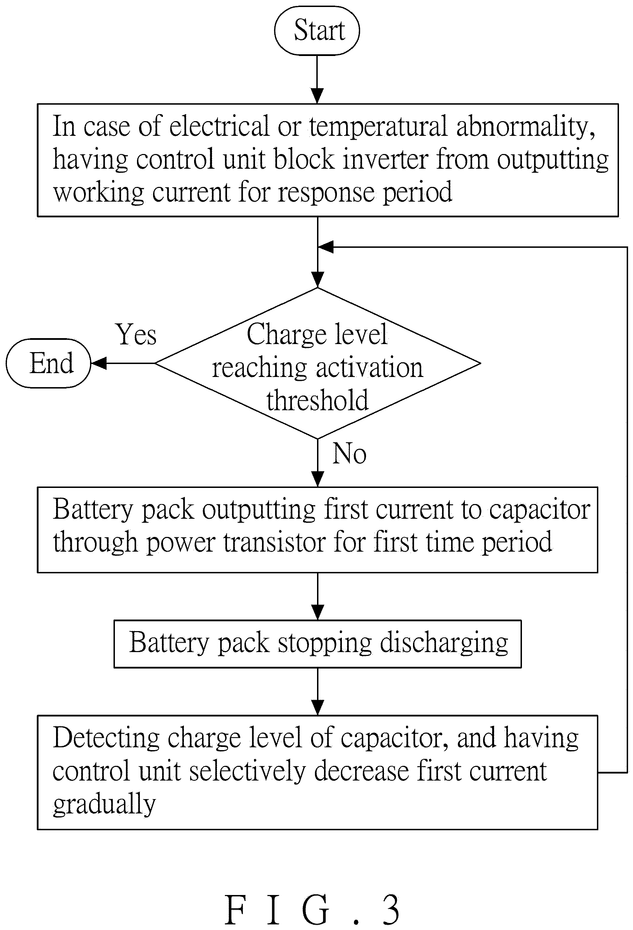

According to another implementation, in addition to performing the second predischarge procedure, the control unit 1 may alternatively control the battery pack 3 to stop discharging in the second time period, as shown in FIG. 3.

In this case, the disclosed method only comprises performing the first discharge procedure intermittently without involving the second predischarge procedure. A user may implement the method in either way according to the practical arrangements of the capacitor 51 and the circuitry.

It is to be noted that, in practical use, the inverter 5 may be initially inactive and not output the working current. In this case, the method includes first performing the intermittent discharge step and the intermittent-discharge detection step, and, after the inverter 5 is activated successfully, performing the protection step continuously, regularly, or irregularly, so as to detect the status of the energy storage apparatus 100, thereby ensuring safety.

The foregoing steps may be performed in alternative sequences other than those shown in FIG. 3 and FIG. 4. For example, the disclosed method may include performing both of the first discharge procedure and the intermittent-discharge detection step for several times before performing the second predischarge procedure for one time. Alternatively, the disclosed method may include performing the first discharge procedure for several times before performing the intermittent-discharge detection step for one time. Any sequence and arrangement of the foregoing steps form an aspect of the disclosure and shall be embraced within the scope of the present invention.

Referring to FIG. 1 and FIG. 4, by intermittently charging with the first current I1, when the load A is relatively high or the capacitor 51 is relatively large, the capacitor 51 can be fully charged rapidly without having any electrical or temperatural abnormality.

## Claims

1. A method for intermittently discharging an inverter (5) in an energy storage apparatus (100), wherein the energy storage apparatus (100) has a battery pack (3), the method being **characterized in**:
a protection step, comprising when an electrical or temperatural abnormality occurs in the inverter (5) and/or the battery pack (3), having a control unit (1) block the inverter (5) from outputting a working current before an end of a response period; and
an intermittent discharge step, comprising having a battery management system (2) measure a charge level in a capacitor (51) of the inverter (5) and send information of the charge level to the control unit (1), and when the charge level is below an activation threshold, having the control unit (1) control the battery pack (3) to perform a first discharge procedure to charge the capacitor (51) for at least two times intermittently until the charge level reaches the activation threshold;
each of the at least two times of the first discharge procedure comprises having the battery pack (3) output a first current (I1) to the capacitor (51) through a power transistor (4) throughout a first time period, and stop outputting the first current (I1) when the first time period ends;
each successive two of the at least two times of the first discharge procedure being separated by a second time period; and
the first time period being shorter than the response period, and the first current (I1) being smaller than 5C or a short-circuit discharge current and being greater than 1C.

2. The method of claim 1, being **characterized in that** the electrical abnormality occurs when the battery management system (2) detects that the inverter (5) and/or the battery pack (3) has any of or a combination of an abnormal voltage, an abnormal current, and an short-circuit current.

3. The method of claim 1, being **characterized in** further comprising, having the control unit (1) control the battery pack (3) to stop discharging throughout the second time period.

4. The method of claim 1, being **characterized in** further comprising, throughout the second time period, performing a second predischarge procedure, which includes having the control unit (1) control the battery pack (3) to output a second current (I2) to the capacitor (51) through a power resistor, wherein the electrical abnormality includes a current value abnormality, which occurs when the working current is greater than a safe current value, and the second current (I2) is smaller than the safe current value.

5. The method of claim 4, being **characterized in that** the second current (I2) is not greater than 1C.

6. The method of claim 1, being **characterized in that** the first current (I1) is equal in each of the at least two times of the first discharge procedure.

7. The method of claim 1, further comprising an intermittent-discharge detection step, which includes, after each of the at least two times of the first discharge procedure, having the battery management system (2) detect the charge level in the capacitor (51), and having the control unit (1) selectively decrease the first current (I1) gradually as the charge level in the capacitor (51) increases gradually.

8. An energy storage apparatus (100), comprising:
a control unit (1);
a battery management system (2), which is in signal connection with the control unit (1);
a battery pack (3), which is in signal connection with the control unit (1), and is in electrical connection with the battery management system (2);
a power transistor (4), which is in electrical connection with the battery pack (3); and
an inverter (5), which is in electrical connection with the control unit (1) and the battery management system (2), and has a capacitor (51) and an output end (52), wherein the inverter (5) outputs a working current from the output end (52);
whereby when an electrical or temperatural abnormality occurs in the inverter (5) and/or the battery pack (3), the control unit (1) blocks the inverter (5) from outputting the working current before an end of a response period; and
the battery management system (2) detects a charge level in the capacitor (51) and sends information of the charge level to the control unit (1), and when the charge level is below an activation threshold, the control unit (1) controls the battery pack (3) to perform a first discharge procedure to charge the capacitor (51) for at least two times intermittently until the charge level reaches the activation threshold,
wherein each of the at least two times of the first discharge procedure comprises having the battery pack (3) output a first current (I1) to the capacitor (51) through a power transistor (4) throughout a first time period, and stop outputting the first current (I1) when the first time period ends, in which each two successive times of the at least two times of the first discharge procedure are separated by a second time period, and the first time period is shorter than the response period.
